# EUROPÄISCHE PATENTSCHRIFT

(11) **EP 1 967 393 B1**
(45) Veröffentlichungstag und Bekanntmachung des Hinweises auf die Patenterteilung: **09.12.2009**
(21) Anmeldenummer: 07024886.9
(22) Anmeldetag: 21.12.2007
(51) Int. Cl.: B60D 1/62, B60Q 1/30, H01R 13/703

(54) **Elektrische Anhängeranschlusseinrichtung**
Electric trailer connection device
Dispositif de raccordement de remorque électrique

(30) Priorität: 03.03.2007 DE 202007003151 U
(43) Veröffentlichungstag der Anmeldung: 10.09.2008
(73) Patentinhaber: ConWys AG, 6023 Rothenburg (CH)
(72) Erfinder: Wystron, Alexander, 6005 Luzern (CH)
(74) Vertreter: Stenger, Watzke & Ring

(56) Entgegenhaltungen:
- EP-A- 0 483 650
- EP-A- 0 501 014
- EP-A- 0 546 370
- EP-A- 0 692 396
- DE-A1- 10 063 802
- DE-C1- 4 010 765
- DE-C1- 19 625 001

## Beschreibung

Die vorliegende Erfindung betrifft eine elektrische Anhängeranschlußeinrichtung mit einem elektrischen Anschluß, der mittels eines Schalters steuerbar ist, wobei die Einrichtung eine Steuereinheit für den Schalter aufweist, mit der der Schalter in Abhängigkeit eines Steuersignals aus dem Zugfahrzeug steuerbar ist.

Elektrische Anhängeranschlußeinrichtungen dienen dazu, eine elektrische Anlage eines an einem Zugfahrzeug angekoppelten Anhängers in durch das Zugfahrzeug vorgebbarer Weise zu steuern. Die elektrische Anlage umfaßt neben einem elektrischen Versorgungsnetz unter anderem elektrische Einheiten, insbesondere elektrische Verbraucher für unterschiedlichste Anwendungen. Insbesondere ist diesbezüglich eine Beleuchtung des Anhängers zu benennen, die in der Regel in Abstimmung mit der Beleuchtung des Zugfahrzeugs betrieben werden soll. Beispielsweise sollen Rücklichter des Anhängers entsprechend den Rücklichtern des Zugfahrzeugs betrieben werden, beispielsweise Blinkerleuchten, Bremsleuchten, Rückleuchten oder dergleichen. Die elektrische Anlage des Anhängers kann natürlich weitere Komponenten enthalten und soll deshalb nicht auf die reine Beleuchtung des Anhängers beschränkt verstanden werden. So können auch beispielsweise zusätzliche Einrichtungen wie eine Klimaanlage, eine Heizung oder dergleichen vorgesehen sein, die gegebenenfalls ebenfalls mittels der elektrischen Anhängeranschlußeinrichtung in vorgebbarer Weise angesteuert werden sollen.

Damit die elektrische Anhängeranschlußeinrichtung ihre bestimmungsgemäße Funktion ausüben kann, weist sie zumindest einen, in der Regel jedoch mehrere Anschlüsse auf, die vorzugsweise selektiv mit der elektrischen Anlage des Anhängers und hier vorzugsweise mit den einzelnen elektrischen Einheiten wie Beleuchtung und dergleichen in elektrischer Verbindung stehen. Die elektrische Anhängeranschlußeinrichtung weist hierzu einen Schalter auf, der mittels einer Steuereinheit steuerbar ist. Bekannt ist, daß der Schalter eine elektrische Verbindung zwischen dem jeweiligen Anschluß und einer positiven Versorgungsspannung des Fahrzeugs herstellt. Die Versorgungsspannung kann beispielsweise durch einen Akkumulator des Anhängers aber auch durch eine Energieversorgung im Zugfahrzeug gebildet sein. Um den jeweiligen Schalter entsprechend ansteuern zu können, erhält die Steuereinheit Steuersignale vom Zugfahrzeug. Je nachdem, wo das Anhängeranschlußgerät angeordnet ist, entweder im Zugfahrzeug oder im Anhänger, sind die entsprechend erforderlichen Anschlüsse beziehungsweise Signale zwischen Zugfahrzeug und Anhänger zu übermitteln. Häufig ist hierzu eine entsprechende Steckverbindung zwischen Anhänger und Zugfahrzeug vorgesehen, die mit einer erforderlichen Anzahl von Leitungen versehen ist. Zu nennen ist hier insbesondere die genormte 13-polige Steckverbindung zwischen Personenkraftwagen als Zugfahrzeug und Anhängern. Die Steuersignale werden im Zugfahrzeug generiert und können beispielsweise in digital kodierten Signalen bestehen, sie können aber auch direkt Spannungsabgriffe an parallel zu schaltenden Verbrauchern des Zugfahrzeugs und des Anhängers sein.

Eine gattungsgemäße elektrische Anhängeranschlußeinrichtung ist beispielsweise aus der DE 44 24 471 C2 bekannt. Diese lehrt eine elektrische Anhängeranschlußeinrichtung, die zum Einbau in das Zugfahrzeug vorgesehen ist. Sie wird einerseits mit einer elektrischen Energiequelle des Zugfahrzeugs, nämlich dem Akkumulator, sowie mit einem im Zugfahrzeug vorgesehenen Daten-BUS eines Kommunikationsnetzwerkes des Zugfahrzeuges verbunden, und andererseits werden ihre Ausgangsanschlüsse mit einer zugfahrzeugseitigen Anhängerkupplung verbunden. Eine Steuereinheit der elektrischen Anhängeranschlußeinrichtung wertet die Signale auf dem Daten-BUS aus und erzeugt hieraus Steuersignale für elektronische Leistungshalbleiterschalter, die jeweils einen Ausgangsanschluß mit der positiven Versorgungsspannung des Akkumulators verbinden. Mit dieser Einrichtung werden die entsprechenden Beleuchtungselemente des Anhängers angesteuert.

Bei diesem Stand der Technik erweist es sich als nachteilig, daß die an dieser elektrischen Anhängeranschlußeinrichtung angeschlossenen Verbraucher in einer vorgegebenen Verschaltungsanordnung miteinander verschaltet sein müssen. Sämtliche Verbraucher des Anhängers müssen für die bestimmungsgemäße Funktion mit einem ihrer Anschlüsse auf die gemeinsame Anhängermasse geschaltet sein, die darüber hinaus mit der Fahrzeugmasse des Zugfahrzeugs und mit dem negativen Pol des Akkumulators des Zugfahrzeugs verbunden sein muß. Dies ist zwar für die üblichen einfachen Beleuchtungsanforderungen ausreichend, jedoch besteht ein Bedarf, daß die Anschlüsse der elektrischen Anhängeranschlußeinrichtung flexibel für unterschiedliche Schaltungsanforderungen eingesetzt werden können. Wünschenswert ist darüber hinaus, daß die Anschlüsse beliebig eingestellt werden können.

Als Aufgabe der vorliegenden Erfindung ist deshalb die Verbesserung des vorgeschriebenen Stands der Technik dahingehend zu sehen, daß die Anschlüsse einer gattungsgemäßen elektrischen Anhängeranschlußeinrichtung flexibler eingesetzt werden können.

Als Lösung der Aufgabe wird mit der vorliegenden Erfindung vorgeschlagen, daß der Schalter als 3-Zustandsschalter ausgebildet ist. Die Erfindung erlaubt es somit, den Schalter flexibel an die an dem Anschluß angeschlossene elektrische Einheit des Anhängers anzupassen. So ist es im Unterschied zum Stand der Technik nicht mehr erforderlich, daß die elektrische Einheit mit einem ihrer Anschlüsse auf die Fahrzeugmasse insbesondere des Anhängers geklemmt ist. Der Schalter gemäß der Erfindung ist nämlich bezüglich der Verschaltung der elektrischen Einheit flexibel an die Gegebenheiten und Erfordernisse anpaßbar. Darüber hinaus kann vorgesehen sein, daß der Anschluß zwischen zwei vorgebbaren Potentialen hin- und herschaltbar ist. Auf diese Weise können beispielsweise auch elektrische Einheiten wie Wechselblinker oder dergleichen einfach betrieben werden. Vorzugsweise sind die Potentiale durch die Energieversorgung des Fahrzeugs vorgesehen und sind beispielsweise durch Masse und einem positiven Anschluß des Akkumulators vorgegeben. Natürlich können auch hiervon abweichend vorgesehene Zwischenpotentiale durch die Schalter auf den Anschluß geschaltet werden. Dies ist beispielsweise vorteilhaft für elektrische Einheiten, die zweistufig hinsichtlich ihrer Spannung betrieben werden können, um beispielsweise eine Leistung oder dergleichen einzustellen. Eine solche elektrische Einheit kann durch einen Ventilator, eine Heizung oder dergleichen gebildet sein. Neben den zwei zuvor genannten Zuständen, und zwar einem ersten und einem zweiten vom ersten unterschiedlichen Einschaltzustand weist der erfindungsgemäße Schalter einen dritten Schaltzustand auf, aus dem sich auch die Bezeichnung 3-Zustandsschalter ableitet. In diesem Zustand ist der elektrische Anschluß mit keinem der beiden möglichen Potentiale verbunden. Dieser Zustand erweist sich beispielsweise dann von Vorteil, wenn die elektrische Einheit unter bestimmten Bedingungen selbst Energie dem Anschluß zuführen kann. Ein unerwünschtes Einspeisen von elektrischer Energie in den elektrischen Anschluß der Einrichtung kann vermieden werden. Die Erfindung erlaubt es darüber hinaus, vorgebbare Schaltspiele zu realisieren, mit denen Sonderfunktionen eines am Anschluß angeschlossenen elektrischen Verbrauchers erzeugt werden können. So können die verschiedenen Schaltzustände des Schalters in frei vorgebbarer Abfolge miteinander kombiniert werden. Insbesondere ist dies von Vorteil, wenn sich hierdurch Sonderfunktionen der angeschlossenen elektrischen Einheit aktivieren beziehungsweise deaktivieren lassen. Die Steuereinheit liefert hierzu die entsprechenden Signale an den Schalter. Der Schalter kann beispielsweise durch elektromechanische Bauelemente wie Relais, Schütz, Reedkontakt oder dergleichen gebildet sein, er kann aber auch elektronische Schalter wie steuerbare Röhren, Halbleiterschalter wie Transistoren, Tyristoren, Feldeffekttransistoren und dergleichen aufweisen. Der Schalter ist nicht nur zum Schalten von konventionellen Glühfadenlampen, LEDs oder dergleichen geeignet, sondern er ist auch zum Schalten anderer elektrischer Einheiten wie Klimaanlagen, Kühlanlagen, Heizungen oder dergleichen geeignet. Die Erfindung erlaubt ferner eine flexible Anordnung der elektrischen Anhängeranschlußeinrichtung an beliebiger, geeigneter Stelle sowohl im Zugfahrzeug als auch im Anhänger.

Der Anschluß kann die vollständige elektrische Leitung vom Schalter bis zur elektrischen Einheit des Anhängers umfassen. Natürlich kann er auch lediglich Teile hiervon erfassen. Der Anschluß kann beispielsweise durch Steckverbinder, Anschlußleitungen, die mit weiteren Elementen verbindbar sind, oder dergleichen gebildet sein. Steckverbinder können beispielsweise Steckkontakthülsen, Steckkontaktstifte und dergleichen aufweisen. Vorzugsweise umfaßt der Anschluß eine elektrische Leitung mit einer Kontakthülse, der in einer Anhängerkupplung anordbar ist.

Gemäß einer Weiterbildung wird vorgeschlagen, daß der Anschluß kurzschlußfest ist. Hierdurch kann erreicht werden, daß die elektrische Anhängeranschlußeinrichtung gegen Überlastung aufgrund von Kurzschluß geschützt ist. Die Kurzschlußfestigkeit kann beispielsweise dadurch erreicht werden, daß der Anschluß einen Schutzwiderstand aufweist. Durch diesen kann der maximale Strom begrenzt werden. Aber auch andere Überlastmittel wie Schmelzsicherung, elektronische Sicherung, Sicherungsautomat und dergleichen können zum Einsatz kommen. Die Zuverlässigkeit der elektrischen Anhängeranschlußeinrichtung kann verbessert werden, weil beispielsweise bei der Montage auftretende Fehlschaltungen und dergleichen nicht zu einer Beschädigung der Einrichtung führen.

Gemäß einer Ausgestaltung wird vorgeschlagen, daß der Schalter eine Strombegrenzungseinheit aufweist. Die Strombegrenzungseinheit kann durch eine elektronische Stromquelle gebildet sein, die lediglich einen vorgebbaren maximalen Strom bereitstellen kann. Insbesondere bei Halbleiterschaltern kann durch eine geeignete, zusätzliche Beschaltung eine maximale Stromführung vorgegeben werden. Dies kann beispielsweise dadurch erreicht werden, daß ein Stromsensorsignal ausgewertet wird und auf ein Steuersignal für den Halbleiterschalter einwirkt. Sobald ein maximal vorgebbarer Strom erreicht wird, wird das entsprechende Steuersignal für den Leistungshalbleiterschalter so beeinflußt, daß einer weiteren Stromzunahme entgegengewirkt wird. Stromsensoren können beispielsweise niederohmige Widerstände, Shunts, Hallsensoren oder dergleichen sein. Vorteilhaft ist diese Ausführung ferner für eine Parallelschaltung von zwei oder mehreren Schaltern, um beispielsweise eine hohe Strombelastbarkeit erreichen zu können. Die vorbeschriebene Maßnahme kann zur Vergleichmäßigung der Strombelastung der einzelnen parallel geschalteten Schalter führen.

Nach einer weiteren vorteilhaften Ausgestaltung weist die elektrische Anhängeranschlußeinrichtung eine Sensoreinheit auf. Die Sensoreinheit ist vorzugsweise mit dem Anschluß elektrisch verbunden. Mit der Sensoreinheit kann beispielsweise die Funktion des Schalters und/oder auch die Funktion der am Anschluß angeschlossenen elektrischen Einheit geprüft oder überwacht werden. So kann die Sensoreinheit beispielsweise dazu dienen, einen Defekt der angeschlossenen elektrischen Einheit festzustellen. Auch Isolationsfehler können mit der Sensoreinheit ermittelt werden. Die Sensoreinheit kann dazu die erforderlichen Daten über den Anschluß ermitteln. Zusätzlich können auch Informationen der Schalter herangezogen werden, um eine Vielzahl von Parametern prüfen beziehungsweise überwachen zu können. Die Sensoreinheit kann beispielsweise durch eine Spannungs- und/oder Strommeßeinheit gebildet sein.

Gemäß einer Weiterbildung ist die Sensoreinheit für eine bidirektionale Detektion geeignet. Dies kann beispielsweise dadurch erreicht werden, daß die Sensoreinheit für bipolare Signale ausgelegt wird. Natürlich können auch zwei separate Sensoreinheiten vorgesehen sein, die jeweils für eine entgegengesetzte Polarität geeignet sind.

Gemäß einer weiteren Ausgestaltung weist die Sensoreinheit einen Pegelumsetzer auf. Der Pegelumsetzer dient vorzugsweise dazu, das Sensorsignal in einen vorgebbaren Potentialbereich zu transformieren, so daß es einer weiteren Auswertung zugeführt werden kann. Pegelumsetzer können beispielsweise direkt gekoppelt sein oder auch eine galvanische Trennung aufweisen. Direkt gekoppelte Pegelumsetzer weisen beispielsweise elektronische Widerstände, Dioden, insbesondere Zehnerdioden und dergleichen auf. Gegebenenfalls können auch Spulen und Kondensatoren vorgesehen sein. Eine galvanische Trennung wird vorzugsweise durch optische Bauelemente wie Optokoppler, Übertrager, Leuchtdioden-Phototransistor-Kombinationen und dergleichen verwirklicht.

Darüber hinaus wird vorgeschlagen, daß die Sensoreinheit eine Filtereinheit aufweist. Die Filtereinheit kann beispielsweise durch einen Kondensator, ein passives Netzwerk aus Spulen, Kondensatoren und/oder Widerständen oder dergleichen gebildet sein. Die Filtereinheit dient dazu, unerwünschte Störsignale im Sensorsignal zu unterdrücken, so daß eine zuverlässige Auswertung des Sensorsignals erreicht werden kann. Die Zuverlässigkeit kann weiter verbessert werden. Darüber hinaus kann erreicht werden, daß eine folgende Auswerteschaltung aufgrund von unzulässigen Störsignalen nicht gestört oder sogar beschädigt wird.

Gemäß einer Weiterbildung weist die Sensoreinheit eine Schwellwerteinheit auf. Die Schwellwerteinheit dient dazu, die Sensoreinheit hinsichtlich ihrer Detektionswirkung einstellen zu können. Die Schwellwerteinheit kann beispielsweise durch Zehnerdioden, Transistorschaltungen, passive Netzwerke oder dergleichen gebildet sein.

Gemäß einer Weiterbildung wird vorgeschlagen, daß mit dem Schalter der Anschluß mit wenigstens zwei elektrischen Potentialen verbindbar ist. Vorzugsweise handelt es sich bei den zwei Potentialen um Masse und eine Versorgungsspannung des Zugfahrzeugs beziehungsweise des Anhängers, beispielsweise gebildet durch den positiven und den negativen Anschluß eines Akkumulators. Der Schalter schaltet die Potentiale vorzugsweise selektiv wechselweise zum elektrischen Anschluß. Auf diese Weise kann der elektrische Anschluß sowohl mit Masse als auch mit einem weiteren elektrischen Potential, und zwar insbesondere der positiven Versorgungsspannung, verbunden werden. Natürlich kann der Schalter auch dazu vorgesehen sein, mehr als zwei Potentiale mit dem elektrischen Anschluß selektiv zu verbinden.

Gemäß einer Weiterbildung weist der Schalter ein Schaltelement auf. Das Schaltelement kann beispielsweise durch einen elektromechanischen Schalter, wie einem Relais, einem Reedkontakt oder auch durch einen Halbleiterschalter, wie einem Tyristor, einem Transistor, oder dergleichen gebildet sein. Natürlich können auch mehrere Schaltelemente miteinander kombiniert sein, um gemeinsam den Schalter zu bilden. Vorzugsweise ist für jede Verbindungsmöglichkeit mit einem Potential ein separates Schaltelement vorgesehen. Aus schaltungstechnischen Gründen können natürlich auch zwei oder mehrere Schaltelemente miteinander parallel geschaltet sein, um beispielsweise eine erhöhte Strombeanspruchung zu erreichen.

Gemäß einer vorteilhaften Weiterbildung wird vorgeschlagen, daß der Schalter einen Pegelumsetzer aufweist. Der Pegelumsetzer dient dazu, ein Steuersignal für den Schalter auf einen geeigneten Pegel umzusetzen, so daß dieser damit bestimmungsgemäß und zuverlässig aktiviert werden kann. Ein Pegelumsetzer kann beispielsweise ein Spannungswandler von 5 auf 12 Volt für ein Steuersignal sein. Auf diese Weise ist es möglich, den Schalter auch mit unterschiedlichen Steuersignalpegeln für ihre bestimmungsgemäße Funktion ansteuern zu können. Natürlich kann der Pegelumsetzer auch Filter aufweisen, um das Steuersignal in eine für den Schalter geeignete Form umwandeln zu können, beispielsweise in den Flankensteilheiten begrenzt werden oder dergleichen. Dies ist insbesondere dann von Vorteil, wenn Anforderungen hinsichtlich der elektromagnetischen Störfestigkeit und der elektromagnetischen Störaussendung eingehalten werden sollen. Derartige Filter können beispielsweise passiver Natur sein und durch eine Kombination passiver elektronischer Bauelemente gebildet sein.

Gemäß einer vorteilhaften Weiterbildung wird vorgeschlagen, daß die Steuereinheit eine Rechnereinheit aufweist. Die Rechnereinheit kann dazu vorgesehen sein, die Steuersignale für die Schalter zu generieren. Darüber hinaus können die Sensorsignale ausgewertet werden. Dazu kann die Rechnereinheit ein Programm aufweisen, mit welchem die entsprechenden Sensorsignale verarbeitet und die entsprechenden Signale für den Schalter erzeugt werden können. Zudem können bestimmte Zusatzfunktionen vorgesehen sein, die es beispielsweise ermöglichen, aufgrund von ausgewerteten Sensorsignalen bestimmte Schaltzustände des Schalters zu blockieren. So kann beispielsweise vorgesehen sein, daß bei Detektion eines Kurzschlusses der Schalter ausgeschaltet werden muß. Darüber hinaus kann die Rechnereinheit dazu vorgesehen sein, eine Kommunikationsverbindung zu einem Kommunikationsnetzwerk des Zugfahrzeugs herzustellen und über dieses Steuerbefehle für die angeschlossenen elektrischen Einheiten des Anhängers erhalten. Ferner können auch Zustandssignale an das Kommunikationsnetzwerk des Zugfahrzeugs zurückübermittelt werden, welche beispielsweise Störzustände und dergleichen übermitteln können. Natürlich kann mittels der Steuereinheit auch eine Betriebsgröße des Zugfahrzeugs erfaßt und ausgewertet werden, um beispielsweise einen Schaltzustand des Schalters beeinflussen zu können. So kann vorgesehen sein, daß beispielsweise mit der Steuereinheit über eine an einem Blinker des Zugfahrzeugs angeschlossene elektrische Leitung der Blinkzustand der Zugfahrzeugsleuchte erfaßt wird und ein entsprechendes Steuersignal für eine zugehörige Blinkleuchte des Anhängerfahrzeugs erzeugen. Hierzu wird der Schalter entsprechend angesteuert.

Weiterhin wird vorgeschlagen, daß die Sensoreinheit und/oder der Schalter und/oder die Rechnereinheit einstückig ausgebildet sind. Dies kann beispielsweise dadurch verwirklicht sein, daß die entsprechenden Einheiten oder der Schalter gemeinsam auf einer elektronischen Leiterplatte angeordnet sind. Darüber hinaus können die Einheiten oder der Schalter mit seinen Schaltelementen auch durch eine gemeinsame Halbleiterbaugruppe gebildet sein, beispielsweise ein ASIC, ein FPGA, oder dergleichen. Der Verkabelungsaufwand kann reduziert werden und zugleich kann die Zuverlässigkeit der Einrichtung erhöht werden.

In einer Weiterbildung weist die Einrichtung eine Dekodier- und/oder Kodiereinheit auf. Diese kann beispielsweise Kommunikationssignale in eine Form umwandeln, die es ermöglicht, mit einem Kommunikationsnetzwerk des Zugfahrzeugs in Kommunikationsverbindung zu treten. So können beispielsweise ausgewertete Sensorsignale in einer geeigneten Form kodiert werden, um sie in das Kommunikationsnetzwerk des Zugfahrzeugs übertragen zu können. Weiterhin können Steuerbefehle vom Zugfahrzeug mittels der Dekodiereinheit dekodiert und ausgewertet werden, so daß die Steuereinheit den Schalter bestimmungsgemäß ansteuern kann. Diese Ausgestaltung erweist sich darüber hinaus dahingehend als vorteilhaft, daß sie in einfacher Weise in eine bestehende Einrichtung eines Zugfahrzeugs oder Anhängers integriert beziehungsweise nachgerückt werden kann. Zusätzlicher Anschlußaufwand kann minimiert werden.

Gemäß einer vorteilhaften Weiterbildung wird vorgeschlagen, daß die Einrichtung eine Schutzeinheit aufweist. Mit der Schutzeinheit soll erreicht werden, daß der Anschluß gegen eine von außen einwirkende elektrische Beanspruchung geschützt werden kann. Eine solche Schutzeinheit kann beispielsweise durch eine Freilaufdiode, ein passives Netzwerk, eine Kombination hiervon oder dergleichen gebildet sein. Besonders vorteilhaft sind Schutzeinheiten in Verbindung mit dem Schalter, die es erlauben, Freilaufströme fließen zu lassen, wie sie beim Schalten induktiver Lasten auftreten können. Die Schutzeinheit kann mit dem Schalter einstückig ausgebildet sein.

Mit der Erfindung wird ferner ein Verfahren zum Betrieb einer erfindungsgemäßen Einrichtung vorgeschlagen, wobei aus einem Zugfahrzeug ein Steuersignal an eine Steuereinheit übermittelt wird und mittels der Steuereinheit aufgrund des Steuersignals ein einen elektrischen Anschluß der Einrichtung steuernder Schalter derart gesteuert wird, daß der Anschluß entweder mit einem vom wenigstens zwei elektrischen Potentialen verbunden oder potentialfrei geschaltet wird. Mit Vorteil wird erreicht, daß gerade bei einer Montage der Einrichtung gefährliche Zustände vermieden werden können, dadurch daß ein Potentialfreischalten des elektrischen Anschlusses ermöglicht wird. Darüber hinaus erlaubt das erfindungsgemäße Verfahren das Schalten von elektrischen Einheiten, die mit einem Anschluß sowohl auf Masse als auch auf der positiven Versorgungsspannung geschaltet sind. Natürlich können auch andere abweichende Potentiale zum Einsatz kommen. Weiterhin erlaubt diese Ausgestaltung auch ein sicheres Schalten von elektrischen Einheiten, die eigene Energiespeicher aufweisen und deshalb nur unter zusätzlichem Aufwand sicher geschaltet werden können. Die erfindungsgemäße Ausgestaltung erlaubt es deshalb die Einrichtung vielseitig und sicher sowie zuverlässig zu verwenden.

Nach einer vorteilhaften Weiterbildung des Verfahrens wird vorgeschlagen, daß der maximal führbare Strom des elektrischen Anschlusses begrenzt wird. Dies hat den Vorteil, daß der Schalter lediglich für einen maximalen elektrischen Strom ausgelegt werden muß und gegen Beschädigung durch fehlerhafte Zustände oder Störzustände geschützt werden kann. Vorzugsweise ist der Schalter derart ausgelegt, daß er den maximalen Strom des elektrischen Anschlusses permanent führen kann. Natürlich kann auch vorgesehen sein, daß zusätzliche Sicherungsmittel, wie beispielsweise Thermosicherungen, Zeitsicherungen oder dergleichen, vorgesehen sind, mit denen das Führen des maximalen Stroms begrenzt werden kann, um eine Beschädigung des Schalters zu vermeiden. Vorteilhaft ist diese Weiterbildung ferner, wenn mehrere Schalter zur Erhöhung der Strombelastbarkeit parallel betrieben werden sollen, weil die Überlastung eines Schalters durch ungleiche Stromaufteilung vermieden oder reduziert werden kann.

Weiterhin wird vorgeschlagen, daß der elektrische Anschluß bei Überschreitung eines Schwellwertes für den Strom mittels des Schalters potentialfrei geschaltet wird. Diese Ausgestaltung erlaubt es, daß das Zuführen elektrischer Energie verhindert wird, wenn der Schwellwert für den Strom überschritten wird. Nach einer weiteren Ausgestaltung wird vorgeschlagen, daß der Schwellwert für den Strom eingestellt wird. Der Schwellwert kann einstellbar sein, so daß er für die elektrische Einheit, die an dem elektrischen Anschluß angeschlossen ist, für deren bestimmungsgemäßen Betrieb optimal eingestellt werden kann. Die elektrische Sicherheit kann weiter verbessert werden.

Eine vorteilhafte Weiterbildung sieht vor, daß eine am elektrischen Anschluß angeschlossene elektrische Einheit detektiert wird. So kann vorgesehen sein, daß der Schalter in einem Ruhezustand den Anschluß potentialfrei schaltet und mit der Sensoreinheit detektiert wird, beispielsweise welche elektrische Einheit an dem elektrischen Anschluß angeschlossen ist. Das detektierte Ergebnis kann dazu verwendet werden, den Schwellwert für den Strom einzustellen. Es kann aber auch dazu vorgesehen sein, daß die Steuereinheit in Abhängigkeit von der Detektion der elektrischen Einheit den Schalter aktiviert bzw. nicht aktiviert. Die Sicherheit kann weiter verbessert werden.

Besonders vorteilhaft erweist es sich, wenn gemäß der Erfindung vor einem Verbinden des Anschlusses mit einem elektrischen Potential die am elektrischen Anschluß angeschlossene elektrische Einheit detektiert wird. So kann verhindert werden, daß ein Schalter, an dem keine elektrische Einheit detektiert wird, derart betätigt wird, daß der Anschluß mit einem elektrischen Potential verbunden wird. Dies verbessert weiter die elektrische Sicherheit.

Mit besonderem Vorteil wird vorgeschlagen, daß zum Detektieren der elektrische Anschluß mittels des Schalters potentialfrei geschaltet wird. In dieser Ausgestaltung ist die Sensoreinheit nicht zum Überwachen des elektrischen Anschlusses vorgesehen, sondern sie dient dazu, ohne Einwirkung elektrischer Versorgungsenergie mit elektrischen Mitteln der Sensoreinheit den elektrischen Anschluß zu überprüfen. Hierdurch wird das zu messende Signal nicht beeinträchtigt.

Eine vorteilhafte Weiterbildung des erfindungsgemäßen Verfahrens sieht vor, daß eine Flankensteilheit einer Ein- und/oder Ausschaltflanke des Schalters eingestellt wird. Diese Ausgestaltung erlaubt es, den Schalter gemäß dem bestimmungsgemäßen Betrieb angepaßt zu schalten. Darüber hinaus erlaubt diese Ausgestaltung, elektromagnetische Störwirkungen zu beeinflussen, insbesondere zu reduzieren. Dies kann beispielsweise durch eine Begrenzung der Flankensteilheit erreicht werden. Darüber hinaus kann die geeignete Wahl der Flankensteilheit dazu führen, Verluste im Schaltbetrieb des Schalters zu reduzieren. Neben der elektrischen Verlustleistung bzw. der elektrischen Verlustenergie kann bei mechanischen Kontakten auch ein Abbrand der Kontakte beeinflußt werden.

Es wird ferner vorgeschlagen, daß ein Sensorsignal an die Steuereinheit übermittelt wird. Das Sensorensignal kann durch die Steuereinheit ausgewertet werden und es kann darüber hinaus dazu verwendet werden, das Schalten des Schalters in einen oder mehrere Zustände zu beeinflussen. So kann in Abhängigkeit vom Sensorsignal vorgesehen sein, daß der Schalter nicht geschaltet werden darf. Es kann aber auch vorgesehen sein, daß aufgrund des Sensorsignals der Schalter den Anschluß freischaltet. Eine Steuerungsvielfalt hinsichtlich der Einstellung kann verbessert werden.

In einer Weiterbildung wird vorgeschlagen, daß das Sensorsignal an das Zugfahrzeug übermittelt wird. Dies erlaubt es, das Zugfahrzeug mit entsprechenden Meßwerten der Sensoreinheit zu versorgen. So kann vorgesehen sein, daß Fehlermeldungen oder gestörte Betriebszustände der am Anschluß angeschlossenen elektrischen Einheit an das Zugfahrzeug übermittelt, welche dann beispielsweise weiter an eine Zentrale übermittelt werden oder dem Führer des Zugfahrzeugs zur Anzeige gebracht werden. Die Zuverlässigkeit kann weiter verbessert werden.

Gemäß einer vorteilhaften Weiterbildung wird vorgeschlagen, daß das Sensorsignal pegelgewandelt und/oder gefiltert wird. Mit dem Pegelwandeln kann das Sensorsignal beispielsweise an einen zulässigen Pegelbereich der Steuereinheit und/oder des Zugfahrzeugs angepaßt werden. Darüber hinaus können Filtermittel vorgesehen sein, mit denen das Sensorsignal derart behandelt wird, daß es besser ausgewertet werden kann. Dies kann beispielsweise dadurch erreicht werden, daß mit den Filtermitteln Störsignale und dergleichen aus dem Sensorsignal herausgefiltert werden. Hierzu kann ein aktives oder passives Netzwerk mit bereits genannten elektronischen Bauelementen vorgesehen sein.

Um das Sensorsignal einer digitalen Signalverarbeitung zugänglich zu machen, wird vorgeschlagen, daß das Sensorsignal digitalisiert wird. Vorzugsweise wird das Digitalisieren mit einem Analog-Digital-Wandler ausgeführt, der das Sensorsignal in ein entsprechendes digitales Signal umwandelt. Vorzugsweise handelt es sich dabei um ein binär digitalisiertes Signal, beispielsweise einem BCD-Code oder dergleichen.

Nach einer weiteren Ausgestaltung der Erfindung wird vorgeschlagen, daß das Sensorsignal kodiert wird. So kann vorgesehen sein, daß ein bereits digitalisiertes Sensorsignal einer Blockkodierung oder dergleichen unterzogen wird. Beim Kodieren kann vorgesehen sein, daß dem Sensorsignal Redundanz hinzugefügt wird, so daß die Zuverlässigkeit bei einer Übermittlung verbessert wird. Als Kodierungen kommen hier beispielsweise eine Fire-Kodierung, eine Bose-Chaudhuri-Kodierung oder dergleichen zum Einsatz. Zusätzlich oder alternativ können auch Faltungskodierungen beziehungsweise Mischformen von Faltungskodierungen und Blockcodes beziehungsweise Verkettungen und/oder Verschachtelungen hiervon vorgesehen sein.

Gemäß einer weiteren Ausgestaltung wird vorgeschlagen, daß ein digitales Steuersignal verwendet wird. Vorzugsweise handelt es sich bei dem Steuersignal ebenfalls um ein binär-kodiertes Signal, welches beispielsweise zur Ansteuerung des Schalters mittels eines Digital-Analog-Wandlers in ein entsprechendes Signal umgewandelt werden kann. Zusätzlich können Filtermittel vorgesehen sein, mit denen das gewandelte Signal gefiltert wird, so daß eine zuverlässige Steuerung des Schalters erreicht werden kann. Die Filterung kann auf ein Quantisierungsrauschen angepaßt sein.

Eine Weiterbildung sieht vor, daß ein kodiertes Steuersignal verwendet wird. Die Kodierung kann beispielsweise eine Reed-Solomon-Kodierung, eine Fire-Kodierung, ein Faltungscode, eine Verschachtelung, Mischformen hiervon oder dergleichen sein. Eine zuverlässige Steuerung kann erreicht werden.

Weitere Vorteile und Merkmale sind der folgenden Beschreibung eines Ausführungsbeispiels zu entnehmen. Die Zeichnung ist eine Schemazeichnung und dient lediglich der Erläuterung des folgenden Ausführungsbeispiels.

Es zeigen:
Figur 1 Ein schematisches Übersichtsschaltbild einer in einem Zugfahrzeug angeordneten, erfindungsgemäßen Anhängeranschlußeinrichtung mit einem an dem Zugfahrzeug angeschlossenen Anhänger,
Figur 2 eine vergrößerte Darstellung der erfindungsgemäßen Anhängeranschlußeinrichtung aus Figur 3 und
Figur 3 ein Prinzipsschaltbild eines Schalters der erfindungsgemäßen Anhängeranschlußeinrichtung.

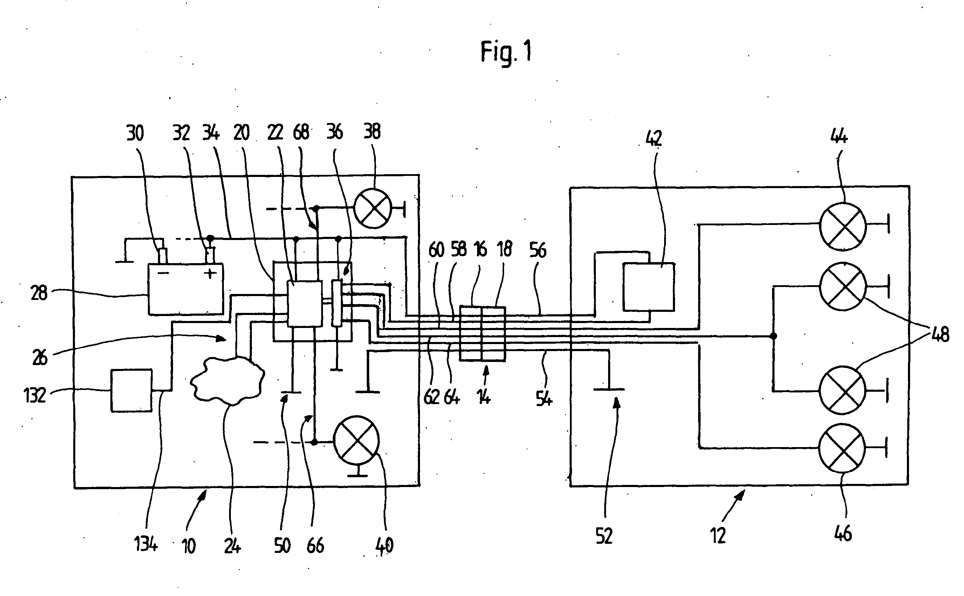

In Figur 1 ist schematisch durch einen Kasten ein Zugfahrzeug 10 dargestellt, in welchem ausschnittsweise ein Teil von dessen elektrischer Anlage dargestellt ist, die einen Akkumulator 28 zur Versorgung mit elektrischer Energie, eine Zugfahrzeugmasse 50 sowie ein Spannungsversorgungsnetz 34 zur Verteilung der positiven Versorgungsspannung des Akkumulators 28 umfaßt. Das Spannungsversorgungsnetz 34 ist an einem Pluspol 32 des Akkumulators 28 angeschlossen. Dessen Minuspol 30 ist mit der Zugfahrzeugmasse 50 in elektrischer Verbindung. Der Akkumulator 28 ist ein handelsüblicher Akkumulator, wie er vielfach im Kraftfahrzeugbereich zum Einsatz kommt.

Ferner sind ausschnittsweise zwei hintere Zugfahrzeugbremslichter 38, 40 dargestellt, die über nicht näher bezeichnete Steuerleitungen im Zugfahrzeug einbeziehungsweise ausgeschaltet werden können. Mit einem ihrer beiden Anschlüsse sind die Zugfahrzeugsbremslichter 38, 40 mit der Zugfahrzeugmasse 50 elektrisch verbunden. Der jeweils andere Anschluß ist mit der entsprechenden Steuerleitung verbunden. Weiterhin weist das Zugfahrzeug 10 einen Zugfahrzeug-CAN-BUS 24 auf, über den weitere Leuchten und auch weitere Einrichtungen des Zugfahrzeugs, die ebenfalls am Spannungsversorgungsnetz 34 und der Zugfahrzeugmasse 50 angeschlossen sind, gesteuert werden können. In der vorliegenden Ausgestaltung ist vorgesehen, daß beispielsweise die Lichtsteuereinheit, die Parkdistanzeinheit und weitere nicht dargestellte elektrische Einheiten des Zugfahrzeugs 10 über den Zugfahrzeug-CAN-BUS 24 gesteuert werden.

Aus Figur 1 ist ferner ersichtlich, daß im Zugfahrzeug 10 eine Anhängeranschlußeinrichtung 20 gemäß der Erfindung angeordnet ist. Über eine Kommunikationsverbindung 26 steht die Anhängeranschlußeinrichtung 20 mit dem Zugfahrzeug-CAN-BUS 24 in Kommunikationsverbindung. Die Anhängeranschlußeinrichtung 20 ist ferner elektrisch an die Zugfahrzeugmasse 50 sowie an das Spannungsversorgungsnetz 36 angeschlossen. Ferner sind Signalleitungen 66 und 68 vorgesehen, die die Anhängeranschlußeinrichtung 20 elektrisch mit den hinteren Zugfahrzeugbremslichtern rechts und links 38, 40 verbinden.

Die Anhängeranschlußeinrichtung 20 weist ferner Anschlüsse 1 bis 4 auf, die mit den Bezugszeichen 68, 60, 62, 64 bezeichnet sind. Diese sind auf eine Steckverbindung 14 zwischen dem Zugfahrzeug 10 und einem am Zugfahrzeug 10 angehängten Anhänger 12 geführt. Zur Steckverbindung 14 sind ferner die Zugfahrzeugmasse 50 sowie das Spannungsversorgungsnetz 34 geführt.

Die Steckverbindung 14 weist eine Zugfahrzeugkupplung 16 sowie einen Anhängerstecker 18 auf. Die Zugfahrzeugkupplung 16 ist am Zugfahrzeug 12 rückwärtig fest angeordnet. Passend zur Zugfahrzeugkupplung 16 ist der Anhängerstecker 18 ausgebildet, so daß auf einfache Weise das Zugfahrzeug 10 und der Anhänger 12 elektrisch miteinander gekoppelt werden können. Zur sicheren, verpolungsfreien Kopplung weist die Steckverbindung 14 Kodierungsmittel auf, die in bekannter Weise durch Kodierungsstifte und Ausformungen an einem Gehäuse des Anhängersteckers 18 vorgesehen sind, die mit entsprechenden Gegenmitteln an der Zugfahrzeugkupplung 16 in Wirkverbindung treten können. Der Anhängerstecker 18 weist in der vorliegenden Ausgestaltung eine der Zugfahrzeugkupplung 16 entsprechende Anzahl von Anschlüssen auf, die mittels nicht näher bezeichneter elektrischer Leitungen in das Zugfahrzeug zu den entsprechenden elektrischen Einheiten 42, 44, 46, 48 geführt sind.

Über eine Masseleitung 54 sind bei gekoppelter Steckverbindung 14 die Zugfahrzeugmasse 50 und eine Anhängermasse 52 elektrisch miteinander gekoppelt. Aus Figur 1 ist ferner ersichtlich, daß hinten rechts und links jeweils ein Anhängerrücklicht 48 vorgesehen ist, wobei die Anhängerrücklichter 48 parallel geschaltet sind. Diese sind mittels einer elektrischen Leitung 62 über den Steckverbinder 14 am Anschluß 3 der Anhängeranschlußeinrichtung 20 angeschlossen. Ferner ist ein hinteres Anhängerbremslicht rechts 44 und ein hinteres Anhängerbremslicht links 46 vorgesehen. Ein Anschluß dieser Lichter ist jeweils auf den Anhängerstecker 18 geführt. Diese sind mittels elektrischen Leitungen 60, 64 über den Steckverbinder 14 an den Anschlüssen 2,4 der Anhängeranschlußeinrichtung 20 angeschlossen. Mit dem jeweils zweiten Anschluß sind alle dargestellten Lichter 44, 46, 48 mit der Anhängermasse 52 elektrisch verbunden.

Weiterhin ist im Anhänger 12 eine Kühleinheit 42 angeordnet. Ein Anschluß der Kühleinheit 42 ist über die Steckverbindung 14 mit dem Spannungsversorgungsnetz 34 elektrisch verbunden. Der zweite Anschluß der Kühleinheit 42 ist über die Steckverbindung 14, eine elektrische Leitung 58 mit einem Anschluß 1 der Anhängeranschlußeinrichtung 20 elektrisch verbunden.

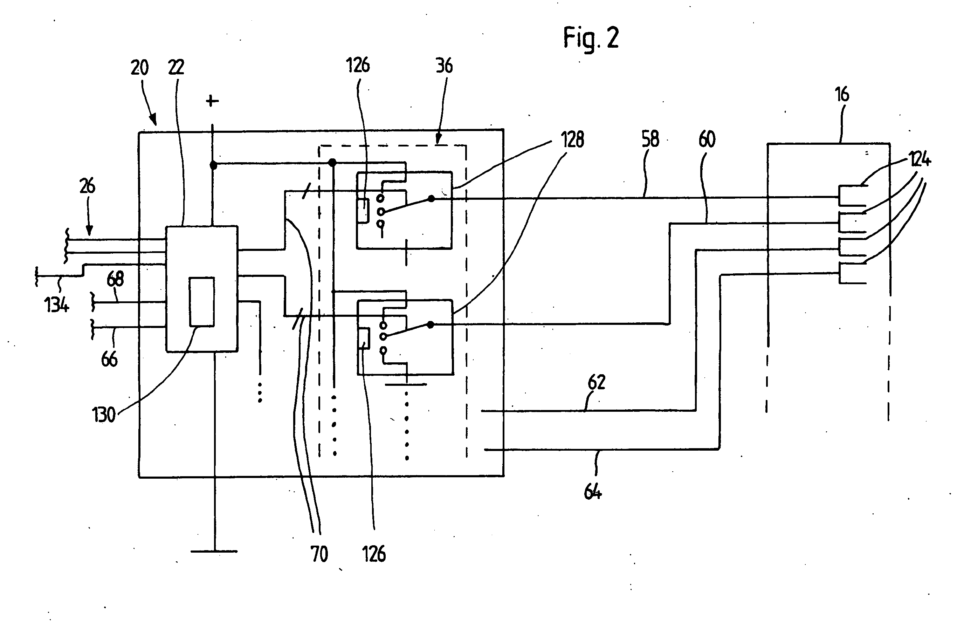

Figur 2 zeigt eine vergrößerte, ausschnittsweise Darstellung der erfindungsgemäßen Anhängeranschlußeinrichtung 20. Zu erkennen ist, daß die Anhängeranschlußeinrichtung 20 eine Steuereinheit 22 aufweist, die ihrerseits eine Rechnereinheit 130 aufweist. Die Steuereinheit 22 steht über die Kommunikationsverbindung 26, hier eine Zweidrahtleitung, mit dem zugfahrzeugseitigen CAN-BUS 24 in Kommunikationsverbindung. Ebenso ist die Steuereinheit 22 mit den Signalleitungen 66, 68 verbunden. Die Anhängeranschlußeinrichtung 20 weist ferner eine Schalterbaugruppe 36 auf, die mit einer Anzahl von Schaltern 128 bestückt ist. Jeder Schalter 128 ist sowohl mit der zugfahrzeugseitigen Masse 50 als auch mit dem Spannungsversorgungsnetz 34 elektrisch verbunden. Dies gilt ebenso für die Steuereinheit 22. Ferner ist jeder Schalter 128 über Steuerleitungen 70 mit der Steuereinheit 22 in Kommunikationsverbindung. Vorliegend ist die Steuerleitung 70 für eine bidirektionale Kommunikation zwischen den Schaltern 128 und der Steuereinheit 22 ausgelegt. Aus dem Prinzipschaltbild jedes Schalters 128 ergibt sich, daß diese jeweils drei Schaltzustände einnehmen können. So kann der Schaltkontakt jeweils mit der zugfahrzeugseitigen Masse 50 als auch mit dem Spannungsversorgungsnetz 34 elektrisch verbunden werden. Darüber hinaus kann der Schaltkontakt des Schalters 128 einen dritten, potentialfreien Zustand einnehmen. Die Schaltzustände werden durch die Steuereinheit 22 entsprechend vorgegeben. Die Anhängeranschlußeinrichtung 20 weist mit jedem Schalter 128 selektiv verbundene Anschlüsse 58, 60, 62, 64 auf, die vorliegend mittels elektrischer Leitungen auf die Zugfahrzeugkupplung 16 geführt sind. Dort sind jeweils Kontakthülsen 124 angeschlagen, die mit entsprechenden, nicht näher bezeichneten Kontaktstiften des Anhängersteckers 18 in elektrische Verbindung treten können.

Jeder Schalter 128 weist ferner eine Sensoreinheit 126 auf, die ebenfalls über die Kommunikationsleitung 70 mit der Steuereinheit 22 in Kommunikationsverbindung stehen. Funktion und Details der Sensoreinheiten 126 werden im folgenden noch ausführlich beschrieben.

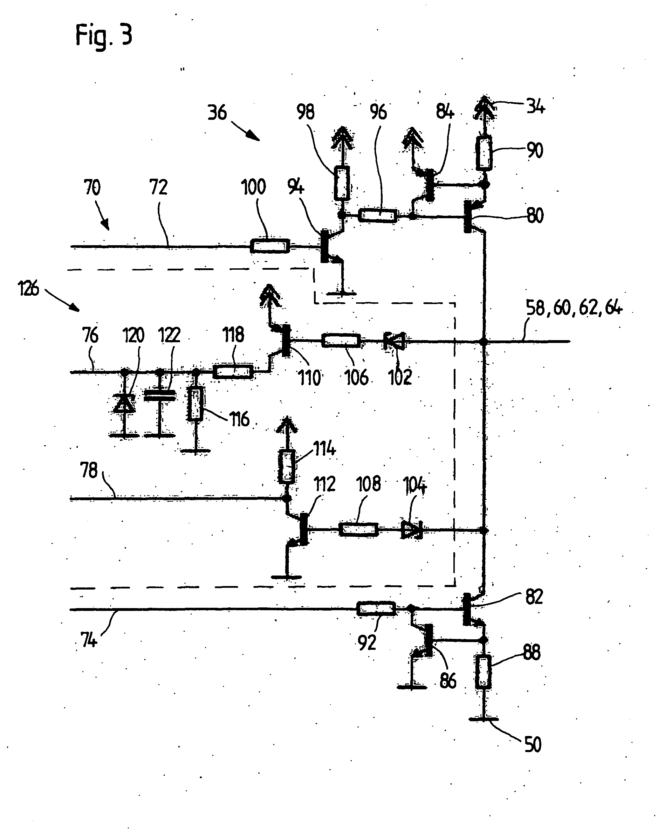

Figur 3 zeigt ein Prinzipschaltbild eines Schalters 128 mit seinen elektronischen Bauteilen. Exemplarisch ist hier der Schalter 128 mit dem elektrischen Anschluß 58 dargestellt. Für die weiteren Schalter gilt das im folgenden Ausgeführte analog. Aus dem Schaltbild ist zu ersehen, daß die Kommunikationsleitung 70 nicht nur die Steuerleitungen 72, 74 für die elektronischen Schaltelemente, sondern auch die Kommunikationsleitungen 76, 78 der Sensoreinheit 126 umfaßt. Die Spannungspegel auf den Steuer- und Kommunikationsleitungen liegen vorliegend unterhalb der Akkumulatorspannung, die ebenfalls am Spannungsversorgungsnetz 34 anliegt. In der vorliegenden Ausgestaltung ist vorgesehen, daß der Schalter 128 zwei Schaltelemente 80, 82 aufweist, mit denen der Ausgang 58 jeweils mit der Zugfahrzeugmasse 50 bzw. dem Spannungsversorgungsnetz 34 verbindbar ist. Die Schaltelemente 80 sind vorliegend als bipolare Transistoren ausgebildet, wobei das Schaltelement 80 durch einen PNP-Transistor und das Schaltelement 82 durch einen NPN-Ttransistor gebildet ist. Vorliegend sind die Transistoren im Schaltbetrieb betrieben, so daß wechselweise der Ausgang mit den entsprechenden Potentialen auf Ansteuerung verbunden werden kann.

An beiden Emittoren der Transistoren 80, 82 sind niederohmige Widerstände 88, 90 jeweils in Reihe geschaltet. Diese Widerstände 88, 90 sind Bestandteile einer Strombegrenzungsschaltung, die jeweils die zusätzlichen Transistoren 84, 86 aufweist. Durch die angegebene Beschaltung wird für jedes Schaltelement erreicht, daß dieses lediglich einen maximalen Strom führen kann. Bekanntermaßen fließt der Strom des Ausgangs 58, 60, 62, 64 auch durch das entsprechende eingeschaltete Schaltelement 80, 82 sowie im wesentlichen durch den entsprechenden Widerstand 88, 90. Hierbei wird ein geringer Spannungsabfall verursacht, der proportional zum Stromfluß ist. Der Spannungsabfall wird mit den jeweiligen Transistoren 84, 86 detektiert. Sobald ein Reaktionsbereich des Transistors 84, 86 aufgrund des Spannungsabfalls am Widerstand 88, 90 erreicht wird, greift dieser in das Steuersignal für den Transistor 80, 82 ein und regelt den Strom in vorgebbarer Weise zurück. Auf diese Weise ist sichergestellt, daß die Transistoren 80, 82 nicht durch einen Überstrom beschädigt werden können.

Weiterhin ist vorgesehen, daß die Transistoren 80, 84 beziehungsweise 82, 86 jeweils thermisch miteinander gekoppelt sind, um auf diese Weise Temperatureinflüsse auf die thermische Sicherung berücksichtigen zu können. Vorzugsweise ist der Schwellwert für den maximal führbaren Strom derart bemessen, daß die Transistoren 80, 82 im Dauerkurzschluß ohne Beschädigung betrieben werden können. Hierzu kann es erforderlich sein, daß die Transistoren 80, 82 mit entsprechenden Kühlmitteln wie einer Kühlfahne, einer Kühlfläche oder dergleichen versehen sind.

Angesteuert wird der Transistor 82 über die Signalleitung 74 und den Widerstand 92. Der Widerstand 92 dient lediglich dazu, den Steuerstrom für den Transistor 82 einerseits zu begrenzen und andererseits eine Stromregelung durch den Transistor 86 zu ermöglichen, ohne daß der entsprechende nicht bezeichnete Steuerausgang der Steuereinheit 22 überlastet werden könnte. In der vorliegenden Ausgestaltung ist vorgesehen, daß das Steuersignal der Signalleitung 74 zwischen den Werten 0 Volt und 5 Volt je nach Schaltzustand liegt.

Der Transistor 80 weist für seine Ansteuerung über ein entsprechendes Signal auf der Signalleitung 72 einen Pegelwandler auf, der aus den Widerständen 98, 100 sowie dem Transistor 94 gebildet ist. In der vorliegenden Ausgestaltung ist nämlich vorgesehen, daß das Steuersignal für den Transistor 80 von der Steuereinheit 22 ebenfalls mit einem Pegel zwischen 0 und 5 Volt bereitgestellt wird. Der Pegelwandler wandelt das Signal in ein entsprechend transformiertes Signal für den Transistor 80 um. Die weitere Funktion dieses Schaltelements entspricht im wesentlichen der Funktion des zuvor Beschriebenen. Der Widerstand 96 erfüllt hier in vergleichbarer Weise die Funktion wie beim anderen Schaltelement der Widerstand 92.

Die vorliegende Schaltung erlaubt es nunmehr unabhängig, vorzugsweise selektiv voneinander die Transistoren 80 und 82 einzuschalten. Dies wird durch entsprechende Steuersignale aus der Steuereinheit 22 bewirkt. Sind die von der Steuereinheit 22 gelieferten Pegel auf den Signalleitungen 72, 74 0 Volt, so sind beide Transistoren 80, 82 ausgeschaltet. Wird von der Steuereinheit 22 nun auf der Signalleitung 72 ein 5 Volt-Pegel geliefert, so wird durch den Pegelwandler 94, 98, 100 das Signal in geeigneter Weise transformiert und der Transistor 80 eingeschaltet. Von der Steuereinheit 22 wird parallel dazu auf der Signalleitung 74 0 Volt geliefert, so daß der Transistor 82 ausgeschaltet ist. In diesem Fall ist folglich der Anschluß 58 über den Transistor 80 und den Widerstand 90 mit dem Spannungsversorgungsnetz 34 gemäß einem ersten Schaltzustand des Schalters 128 verbunden.

Gemäß einem zweiten Schaltzustand liefert die Steuereinheit 22 auf der Signalleitung 72 0 Volt und auf der Signalleitung 74 5 Volt. In diesem Schaltzustand ist der Transistor 80 ausgeschaltet, wohingegen der Transistor 82 eingeschaltet ist. Der Ausgang 58 ist in diesem Zustand gemäß einem zweiten Schaltzustand des Schalters 128 über den Transistor 82 und dem Widerstand 88 mit der zugfahrzeugseitigen Masse 50 verbunden.

Ein dritter Schaltzustand wird erreicht, sobald die Steuereinheit 22 sowohl auf der Signalleitung 72 als auch auf der Signalleitung 74 jeweils 0 Volt liefert. In diesem Schaltzustand sind beide Transistoren 80, 82 ausgeschaltet. Der Anschluß 58 ist somit im wesentlichen potentialfrei gehalten. Potentialfrei in diesem Zusammenhang bedeutet, daß der Anschluß 58 mit keinem der durch die Transistoren 80, 82 möglichen Potentiale verbunden ist. Zweckmäßigerweise ist vorgesehen, daß die Steuereinheit 22 nicht gleichzeitig einen 5 Volt-Pegel auf den Signalleitungen 72, 74 liefern kann, denn dies würde einen Kurzschluß zwischen der Zugfahrzeugmasse 50 und dem Spannungsversorgungsnetz 34 bewirken.

Im folgenden soll nun auf die Funktion der Sensoreinheit 126 eingegangen werden. Wie aus Figur 3 ersichtlich ist, weist die Sensoreinheit 126 zwei Zweige auf, die jeweils mit Kommunikationsleitungen 76, 78 verbunden sind, über die das entsprechende Sensorsignal an die Steuereinheit 22 übermittelt werden kann. Ein erstes Sensorelement, gebildet aus dem Transistor 112 und den Widerständen 108 und 114, liefert ein Sensorsignal auf der Kommunikationsleitung 78 in einem Bereich zwischen 0 Volt und 5 Volt. Die Begrenzung des positiven Werts 5 Volt ergibt sich dadurch, daß der Widerstand 114 mit seinem dem Transistor 112 gegenüberliegenden Anschluß auf 5 Volt geschaltet ist. Mit dem Widerstand 108 wird ein Zustand des Anschlusses 58 detektiert, durch den Transistor 112 verstärkt und auf die Kommunikationsleitung 78 zur Steuereinheit 22 übermittelt. Eine in Reihe mit dem Widerstand 108 geschaltete Zehnerdiode 104 wirkt als Schwellwerteinheit, so daß die Funktion dieses Sensorelements erst ab einer durch die Zehnerspannung der Zehnerdiode 104 vorgegebenen Spannung aktiv wird.

Ist der Anschluß 58 mit einer Spannung beauflagt, die die Zehnerspannung deutlich überschreitet, geht die Zehnerdiode 104 in den leitenden Zustand über und schaltet über den Widerstand 108 den Transistor 112 ein. Der Transistor 112 zieht das Potential an seinem Kollektor nach Masse, so daß auf der Kommunikationsleitung 78 eine Spannung im Bereich von 0 Volt an die Steuereinheit 22 übermittelt wird. Wird die Zehnerspannung unterschritten, geht die Zehnerdiode in den im wesentlichen nicht leitenden Zustand über, und der Transistor 112 geht im wesentlichen in seinen gesperrten Zustand über. Dadurch daß in diesem Fall durch den Widerstand 114 im wesentlichen kein Strom fließt, liegen auf der Leitung 78 etwa 5 Volt an.

Das zweite Sensorelement, gebildet aus den Widerständen 106, 116, 118 und dem Transistor 110 funktioniert im wesentlichen wie das zuvor beschriebene Sensorelement, jedoch mit unterschiedlicher Polarität. Zu erkennen ist dies daran, daß der Transistor 110 hier im Unterschied zum Transistor 112 ein PNP-Transistor ist, dessen Emitter auf das Spannungsversorgungsnetz 34 geschaltet ist. Als Schaltschwelle ist auch hier eine Zehnerdiode 102 vorgesehen, deren Polarität ebenfalls zur Zehnerdiode 104 umgekehrt ist. Auf diese Weise kann mit diesem Sensorelement in umgekehrter Polarität detektiert werden. Die Zehnerspannungen beider Zehnerdioden 102, 104 sind zwar in der vorliegenden Ausführungsform gleich, sie können jedoch auch bei Bedarf abweichend voneinander gewählt werden.

Als weitere Besonderheit dieses Sensorelements ist ein Pegelwandler gebildet aus der Zweitteilung der Kollektorwiderstände 116, 118 zu erwähnen. Hierdurch wird erreicht, daß der durch den Transistor 110 gelieferte Signalpegel, der auf das Spannungsversorgungsnetz 34 bezogen ist, nunmehr wie beim ersten Sensorelement auch auf die zugfahrzeugbezogene Masse 50 bezogen ist. Eine weitere Besonderheit ist durch die Zehnerdiode 120 gebildet. Diese dient dazu, die Signalspannung auf der Kommunikationsleitung 66 auf den Bereich zwischen etwa 0 und 5 Volt zu begrenzen. Darüber hinaus werden mit dieser Zehnerdiode Spannungsspitzen abgefangen, die möglicherweise über das Spannungsversorgungsnetz 34 als Störwerte eingekoppelt werden könnten. Eine weitere Besonderheit dieses Sensorelements ist durch den Kondensator 122 gegeben, der als Filterelement wirkt. Hiermit sollen weitere störende Einflüsse wie Rauschen, Schaltstörungen und dergleichen unterdrückt werden.

Die Sensorelemente können dazu verwendet werden, zu prüfen, ob die Schaltzustände des Schalters 128 korrekt eingenommen werden. Dies kann beispielsweise dadurch erreicht werden, daß mittels der Steuereinheit 22 die Signale auf den Kommunikationsleitungen 76 und 78 ausgewertet werden. Ist beispielsweise der Transistor 80 eingeschaltet, so liefert die Sensoreinheit 126 auf den Leitungen 76, 78 einen Spannungspegel von jeweils etwa 0 Volt. Im umgekehrten Fall, das heißt wenn der Transistor 78 gesperrt und der Transistor 82 leitend ist, liefert die Sensoreinheit 126 auf beiden Kommunikationsleitungen 76, 78 ein Signal jeweils von etwa 5 Volt.

Tritt dagegen beispielsweise eine Schaltstörung auf, so daß der Transistor 80 bzw. der Transistor 82 nicht vollständig in seinen geöffneten Zustand übergeht und der Anschluß 58 nicht ohne. Spannungsverlust auf das jeweilige Potential 34, 50 gezogen wird, so kann dies durch die Steuereinheit 22 dahingehend detektiert werden, daß die beiden Kommunikationsleitungen 76, 78 nicht mehr mit im wesentlichen dem gleichen Signal beaufschlagt sind. Soll beispielsweise mit dem Transistor 80 der Ausgang 58 mit dem Spannungsversorgungsnetz 34 verbunden werden, und wird beispielsweise ein zu hoher Strom bezogen, so daß die Strombegrenzung eingreift, so wird der Transistor 110 der Sensoreinheit 126 ausgeschaltet bleiben, so daß auf der Kommunikationsleitung 76 ein Signal von etwa 0 Volt ansteht. Erreicht die Spannung am Ausgang 58 nicht die Zehnerspannung der Diode 104, so bleibt auch der Transistor 112 der Sensoreinheit 126 ausgeschaltet, so daß auf der Kommunikationsleitung 78 ein Pegel von etwa 5 Volt anliegt. Aufgrund der Pegeldifferenz kann beispielsweise eine Störung ermittelt werden.

Darüber hinaus kann im potentialfreien Zustand des Schalters 128 mittels der Sensoreinheit 126 die am jeweiligen Anschluß 58, 60, 62, 64 angeschlossene elektrische Einheit 42, 44, 46, 48 detektiert werden. Dies soll anhand des hinteren rechten Bremslichts 44 erläutert werden.

Befindet sich der Schalter 128 in seinem potentialfreien Zustand, ist in diesem Zustand lediglich die Sensoreinheit 126 mit dem Anschluß 60 in Verbindung. Über eine nicht näher bezeichnete elektrische Leitung steht der Anschluß 60 mit dem rechten hinteren Bremslicht 44 des Anhängers 12 elektrisch in Verbindung. Das hintere rechte Bremslicht 44 ist mit seinem zweiten Anschluß auf die Anhängermasse 52 des Anhängers 12 geschaltet, welche wiederum über die Leitung 54 mit der Zugfahrzeugmasse 50 in elektrischer Verbindung steht. Aufgrund des vergleichsweise geringen Widerstands des Bremslichts 44 ist im Normalfall über das Bremslicht 44 das Potential des Anschlusses 58 auf 0 Volt, nämlich der Masse 50, 52, gehalten. Weist die Lampe 44 einen Defekt auf, beispielsweise in Form einer Unterbrechung, so ist abweichend von einem intakten Zustand, bei dem die beiden Kommunikationsleitungen 76, 78 jeweils einen Pegel von etwa 5 Volt übermitteln, in diesem Fall der Pegel der Kommunikationsleitung 76 etwa 0 Volt und der der Kommunikationsleitung 78 etwa 5 Volt. Beide Transistoren 110, 112 der Sensoreinheit 126 sind ausgeschaltet.

Ein Kurzschluß der Lampe 44 läßt sich beim ersten Schaltzustand des Schalters 128 dadurch detektieren, daß der Transistor 80 den Anschluß 60 nicht auf das Potential des Spannungsversorgungsnetzes 34 hochziehen kann, da die Strombegrenzung einwirkt. Auch dies läßt sich wie zuvor beschrieben mit der Sensoreinheit 126 detektieren.

Eine weitere Besonderheit findet sich in einer mit der Steuereinheit 22 verbundenen Signalleitung 134, die ihrerseits an eine Zündeinrichtung 132 des Zugfahrzeugs 10 angeschlossen ist. Mittels der Zündeinrichtung 132 wird ein Antrieb, insbesondere ein Antriebsmotor des Zugfahrzeugs 10 aktiviert beziehungsweise gestartet. Über die Signalleitung 134 wird ein Zustand der Zündeinrichtung 132 an die Steuereinheit 22 übermittelt. Hierdurch kann ein sicheres Schalten der durch die Steuereinheit 22 gesteuerten Schalter 128 erreicht werden. Wird beispielsweise beim Ausschalten der Zündeinrichtung 132 (Abstellen des Motors) der Zugfahrzeug-CAN-BUS 24 ebenfalls ausgeschaltet, erhält die Anhängeranschlußeinrichtung 20 und somit auch die Steuereinheit 22 keine Steuersignale mehr vom Zugfahrzeug 10. Dieser Fall wird dadurch erfaßt, daß die Steuereinheit 22 das Signal der Signalleitung 134 auswertet und die Schalter 128 in vorgebbarer Weise ansteuert. Eine sichere und zuverlässige Funktion der Anhängeranschlußeinrichtung 20 kann erreicht werden.

Weitere Detektionsszenarien sind denkbar, mit denen die Benutzerfreundlichkeit weiter verbessert werden kann.

Vorliegend ist vorgesehen, daß die Steuereinheit 22 und die Schalterbaugruppe 36 einstückig auf einer gemeinsamen Leiterplatte in SMD-Technik bestückt sind.

Das in den Figuren dargestellte Ausführungsbeispiel dient lediglich der Erläuterung der Erfindung und ist für diese nicht beschränkend. So können natürlich die Schaltbelegungen und die Auswertungen der Sensoreinheit beliebig variiert und kombiniert werden, um den jeweiligen schaltungstechnischen Erfordernissen Rechnung zu tragen. Die Erfindung gilt im übrigen nicht nur für Anhängerfahrzeuge, sondern vielmehr für sämtliche Einrichtungen dieser Art, wie zum Beispiel ein Fahrradheckträger. Ferner kann natürlich auch die Funktion von anderen Lichtern alternativ oder zusätzlich vorgesehen sein. So können beispielsweise anstelle von Bremsleuchten auch Blinklichter gesteuert werden.

Mit der Erfindung wird desweiteren vorgeschlagen, ein Verfahren zum Betrieb einer Anhängeranschlußeinrichtung (20) der vorbeschriebenen Art, dadurch gekennzeichnet, daß aus einem Zugfahrzeug (10) ein Steuersignal an eine Steuereinheit (22) übermittelt wird und mittels der Steuereinheit (22) aufgrund des Steuersignals ein einen elektrischen Anschluß (58, 60, 62, 64) der Einrichtung (20) steuernder Schalter (128) derart gesteuert wird, daß der Anschluß (58, 60, 62, 64) entweder mit einem von wenigstens zwei elektrischen Potentialen (30, 32) verbunden oder potentialfrei geschaltet wird.

Es wird ferner vorgeschlagen, daß der maximal führbare Strom des elektrischen Anschlusses (58, 60, 62, 64) begrenzt wird.

Es wird ferner vorgeschlagen, daß der elektrische Anschluß (58, 60, 62, 64) bei Überschreitung eines Schwellwertes für den Strom mittels des Schalters (128) potentialfrei geschaltet wird.

Es wird ferner vorgeschlagen, daß der Schwellwert für den Strom eingestellt wird.

Es wird ferner vorgeschlagen, daß eine am elektrischen Anschluß (58, 60, 62, 64) angeschlossene elektrische Einheit (42, 44, 46, 48) detektiert wird.

Es wird ferner vorgeschlagen, daß vor einem Verbinden des elektrischen Anschlusses (58, 60, 62, 64) mit einem elektrischen Potential (30, 32) die am elektrischen Anschluß (58, 60, 62, 64) angeschlossene elektrische Einheit (42, 44, 46, 48) detektiert wird.

Es wird ferner vorgeschlagen, daß zum Detektieren der elektrische Anschluß (58, 60, 62, 64) mittels des Schalters (128) potentialfrei geschaltet wird.

Es wird ferner vorgeschlagen, daß eine Flankensteilheit einer Ein- und/oder Ausschaltflanke des Schalters (128) eingestellt wird.

Es wird ferner vorgeschlagen, daß ein Sensorsignal an die Steuereinheit (22) übermittelt wird.

Es wird ferner vorgeschlagen, daß das Sensorsignal an das Zugfahrzeug (10) übermittelt wird.

Es wird ferner vorgeschlagen, daß das Sensorsignal pegelgewandelt und/oder gefiltert wird.

Es wird ferner vorgeschlagen, daß das Sensorsignal digitalisiert wird.

Es wird ferner vorgeschlagen, daß das Sensorsignal kodiert wird.

Es wird ferner vorgeschlagen, daß ein digitales Steuersignal verwendet wird.

Es wird ferner vorgeschlagen, daß ein kodiertes Steuersignal verwendet wird.

### Bezugszeichenliste

- 10: Zugfahrzeug
- 12: Anhänger
- 14: Steckverbindung
- 16: Zugfahrzeugkupplung
- 18: Anhängerstecker
- 20: Anhängeranschlußeinrichtung
- 22: Steuereinheit
- 24: Zugfahrzeug- CAN-BUS
- 26: Kommunikationsverbindung
- 28: Akkumulator
- 30: Minuspol
- 32: Pluspol
- 34: Spannungsversorgungsnetz
- 36: Schalterbaugruppe
- 38: Zugfahrzeugbremslicht hinten rechts
- 40: Zugfahrzeugbremslicht hinten links
- 42: Kühleinheit
- 44: Anhängerbremslicht hinten rechts
- 46: Anhängerbremslicht hinten links
- 48: Anhängerrücklicht
- 50: Zugfahrzeugmasse
- 52: Anhängermasse
- 54: Masseleitung
- 56: Versorgungsleitung
- 58: Anschluß 1
- 60: Anschluß 2
- 62: Anschluß 3
- 64: Anschluß 4
- 66: Signalleitung Zugfahrzeugbremslicht hinten rechts
- 68: Signalleitung Zugfahrzeugbremslicht hinten links
- 70: Kommunikationsleitungen
- 72: Steuerleitung
- 74: Steuerleitung
- 76: Sensorleitung
- 78: Sensorleitung
- 80: Leistungstransistor
- 82: Leistungstransistor
- 84: Transistor
- 86: Transistor
- 88: Widerstand
- 90: Widerstand
- 92: Widerstand
- 94: Transistor
- 96: Widerstand
- 98: Widerstand
- 100: Widerstand
- 102: Zenerdiode
- 104: Zenerdiode
- 106: Widerstand
- 108: Widerstand
- 110: Transistor
- 112: Widerstand
- 114: Widerstand
- 116: Widerstand
- 118: Widerstand
- 120: Zenerdiode
- 122: Kondensator
- 124: Kontakthülse
- 126: Sensoreinheit
- 128: Schalter
- 130: Rechnereinheit
- 132: Zündeinrichtung
- 134: Signalleitung

## Patentansprüche

1. Elektrische Anhängeranschlußeinrichtung (20) mit einem elektrischen Anschluß (58, 60, 62, 64), der mittels eines Schalters (128) steuerbar ist, wobei die Einrichtung (20) eine Steuereinheit (22) für den Schalter (128) aufweist, mit der der Schalter (128) in Abhängigkeit eines Steuersignals aus dem Zugfahrzeug (10) steuerbar ist,
**dadurch gekennzeichnet,**
**daß** der Schalter (128) als Drei-Zustandsschalter ausgebildet ist.

2. Einrichtung nach Anspruch 1, **dadurch gekennzeichnet, daß** der Anschluß (58, 60, 62, 64) kurzschlußfest ist.

3. Einrichtung nach Anspruch 1 oder 2, **dadurch gekennzeichnet, daß** der Schalter (128) eine Strombegrenzungseinheit (84, 86, 90, 92) aufweist.

4. Einrichtung nach einem der Ansprüche 1 bis 3, **gekennzeichnet durch** eine Sensoreinheit (102, 104, 106, 108).

5. Einrichtung nach einem der Ansprüche 1 bis 3, **dadurch gekennzeichnet, daß** die Sensoreinheit (102, 104, 106, 108) für eine bidirektionale Detektion geeignet ist.

6. Einrichtung nach einem der Ansprüche 1 bis 3, **dadurch gekennzeichnet, daß** die Sensoreinheit (102, 104, 106, 108) einen Pegelumsetzer (110, 112, 114, 116, 118, 120) aufweist.

7. Einrichtung nach einem der Ansprüche 1 bis 3, **dadurch gekennzeichnet, daß** die Sensoreinheit (102, 104, 106, 108) eine Filtereinheit (122) aufweist.

8. Einrichtung nach einem der Ansprüche 1 bis 3, **dadurch gekennzeichnet, daß** die Sensoreinheit (102, 104, 106, 108) eine Schwellwerteinheit (102, 104) aufweist.

9. Einrichtung nach einem der Ansprüche 1 bis 3, **dadurch gekennzeichnet, daß** mit dem Schalter (128) der elektrische Anschluß (58, 60, 62, 64) mit wenigstens zwei elektrischen Potentialen (30, 32) selektiv verbindbar ist.

10. Einrichtung nach einem der Ansprüche 1 bis 3, **dadurch gekennzeichnet, daß** der Schalter (128) ein Schaltelement (80, 82) aufweist.

11. Einrichtung nach einem der Ansprüche 1 bis 3, **dadurch gekennzeichnet, daß** der Schalter (128) einen Pegelumsetzer (94, 96, 98, 100) aufweist.

12. Einrichtung nach einem der Ansprüche 1 bis 3, **dadurch gekennzeichnet, daß** die Steuereinheit (22) eine Rechnereinheit (130) aufweist.

13. Einrichtung nach einem der Ansprüche 1 bis 3, **dadurch gekennzeichnet, daß** die Sensoreinheit (102, 104, 106, 108) und/oder der Schalter (128) und/oder die Rechnereinheit (130) einstückig ausgebildet sind.

14. Einrichtung nach einem der Ansprüche 1 bis 3, **gekennzeichnet durch** eine Dekodier- und/oder Kodiereinheit.

15. Einrichtung nach einem der Ansprüche 1 bis 3, **gekennzeichnet durch** eine Schutzeinheit.

## Claims

1. An electric trailer connection device (20) comprising an electrical terminal (58, 60, 62, 64) which may be controlled by means of a switch (128), the device (20) comprising a control unit (22) for the switch (128), by means of which the switch (128) may be controlled depending on a control signal from the towing vehicle (10), **characterised in that** the switch (128) is configured as a three-way switch.

2. The device according to Claim 1, **characterised in that** the terminal (58, 60, 62, 64) is short-circuit protected.

3. The device according to Claim 1 or 2, **characterised in that** the switch (128) comprises a current limiting unit (84, 86, 90, 92).

4. The device according to one of Claims 1 to 3, **characterised by** a sensor unit (102, 104, 106, 108).

5. The device according to one of Claims 1 to 3, **characterised in that** the sensor unit (102, 104, 106, 108) is suitable for bidirectional detection.

6. The device according to one of Claims 1 to 3, **characterised in that** the sensor unit (102, 104, 106, 108) comprises a level converter (110, 112, 114, 116, 118, 120).

7. The device according to one of Claims 1 to 3, **characterised in that** the sensor unit (102, 104, 106, 108) comprises a filter unit (122).

8. The device according to one of Claims 1 to 3, **characterised in that** the sensor unit (102, 104, 106, 108) comprises a threshold unit (102, 104).

9. The device according to one of Claims 1 to 3, **characterised in that** by means of the switch (128) the electrical terminal (58, 60, 62, 64) may be selectively connected to at least two electrical potentials (30, 32).

10. The device according to one of Claims 1 to 3, **characterised in that** the switch (128) comprises a switch element (80, 82).

11. The device according to one of Claims 1 to 3, **characterised in that** the switch (128) comprises a level converter (94, 96, 98, 100).

12. The device according to one of Claims 1 to 3, **characterised in that** the control unit (22) comprises a computer unit (130).

13. The device according to one of Claims 1 to 3, **characterised in that** the sensor unit (102, 104, 106, 108) and/or the switch (128) and/or the computer unit (130) are configured integrally.

14. The device according to one of Claims 1 to 3, **characterised by** a decoding and/or coding unit.

15. The device according to one of Claims 1 to 3, **characterised by** a protective unit.

## Revendications

1. Dispositif de raccordement de remorque (20) électrique comprenant un raccordement (58, 60, 62, 64) électrique, qui peut être commandé au moyen d'un interrupteur (128), le dispositif (20) présentant une unité de commande (22) pour l'interrupteur (128) avec laquelle l'interrupteur (128) peut être commandé en fonction d'un signal de commande à partir du véhicule tracteur (10),
**caractérisé en ce que**
l'interrupteur (128) est conçu sous forme d'interrupteur à trois états.

2. Dispositif selon la revendication 1, **caractérisé en ce que** le raccordement (58, 60, 62, 64) est résistant aux courts-circuits.

3. Dispositif selon la revendication 1 ou 2, **caractérisé en ce que** l'interrupteur (128) présente une unité de limitation de courant (84, 86, 90, 92).

4. Dispositif selon l'une quelconque des revendications 1 à 3, **caractérisé par** une unité de détecteur (102, 104, 106, 108).

5. Dispositif selon l'une quelconque des revendications 1 à 3, **caractérisé en ce que** l'une unité de détecteur (102, 104, 106, 108) convient pour une détection bidirectionnelle.

6. Dispositif selon l'une quelconque des revendications 1 à 3, **caractérisé en ce que** l'unité de détecteur (102, 104, 106, 108) présente un convertisseur de niveau (110, 112, 114, 116, 118, 120).

7. Dispositif selon l'une quelconque des revendications 1 à 3, **caractérisé en ce que** l'unité de capteur (102, 104, 106, 108) présente une unité de filtre (122).

8. Dispositif selon l'une quelconque des revendications 1 à 3, **caractérisé en ce que** l'unité de capteur (102, 104, 106, 108) présente une unité de valeur seuil (102, 104).

9. Dispositif selon l'une quelconque des revendications 1 à 3, **caractérisé en ce que**, avec l'interrupteur (128), le raccordement (58, 60, 62, 64) électrique peut être relié de façon sélective à au moins deux potentiels (30, 32) électriques.

10. Dispositif selon l'une quelconque des revendications 1 à 3, **caractérisé en ce que** l'interrupteur (128) présente un élément de commutation (80, 82).

11. Dispositif selon l'une quelconque des revendications 1 à 3, **caractérisé en ce que** l'interrupteur (128) présente un convertisseur de niveau (94, 96, 98, 100).

12. Dispositif selon l'une quelconque des revendications 1 à 3, **caractérisé en ce que** l'unité de commande (122) présente une unité d'ordinateur (130).

13. Dispositif selon l'une quelconque des revendications 1 à 3, **caractérisé en ce que** l'unité de capteur (102, 104, 106,108) et/ou l'interrupteur (128) et/ou l'unité d'ordinateur (130) sont conçus d'une seule pièce.

14. Dispositif selon l'une quelconque des revendications 1 à 3, **caractérisé par** une unité de décodage et/ou de codage.

15. Dispositif selon l'une quelconque des revendications 1 à 3, **caractérisé par** une unité de protection.
